# EUROPEAN PATENT APPLICATION

(11) **EP 4 407 983 A1**
(43) Date of publication of application: **31.07.2024**
(21) Application number: 24150828.2
(22) Date of filing: 09.01.2024
(51) Int. Cl.: H04N 7/18, G08G 1/00

(54) **REMOTE SUPPORT SYSTEM, REMOTE SUPPORT METHOD, AND REMOTE SUPPORT PROGRAM**

(30) Priority: 25.01.2023 JP 2023009491
(71) Applicant: TOYOTA JIDOSHA KABUSHIKI KAISHA, Toyota-shi, Aichi-ken, 471-8571 (JP)
(72) Inventor: MOMOSE, Hirofumi, Toyota-shi, 471-8571 (JP); KAWAMURO, Junji, Toyota-shi, 471-8571 (JP); TAMAGAWA, Shuichi, Toyota-shi, 471-8571 (JP); AKATSUKA, Kosuke, Toyota-shi, 471-8571 (JP); SUEHIRO, Yuki, Toyota-shi, 471-8571 (JP); KOBAYASHI, Naofumi, Toyota-shi, 471-8571 (JP); SUDA, Rio, Toyota-shi, 471-8571 (JP)
(74) Representative: J A Kemp LLP

(57) **Abstract**

The remote support system includes a display device (53), at least one processor (32), and at least one memory (34) storing a plurality of instructions (36) executable by the at least one processor (32). The plurality of instructions (36) causes the at least one processor (32) to: acquire video images related to operation of a vehicle (20) from a plurality of monitoring cameras (10) installed on or near an operation route of the vehicle (20); select a video image to be displayed on the display device (53) from among the video images acquired by the plurality of monitoring cameras (10) based on information regarding current and future relative relationship between each of the plurality of monitoring cameras (10) and the vehicle (20); and display the selected video image on the display device (53).

## Description

### CROSS-REFERENCE TO RELATED APPLICATION

The present application claims priority to Japanese Patent Application No. 2023-009491, filed January 25, 2023, the contents of which application are incorporated herein by reference in their entirety.

### BACKGROUND

### Field

The present disclosure relates to a remote support system, a remote support method, and a remote support program for providing remote support to a vehicle.

### Background Art

The prior art disclosed in US 2021/0089018 A1 receives a safety condition required for remotely controlling a vehicle, and generates a remote-control signal when the safety condition is satisfied.

### SUMMARY

The above-described prior art is a kind of remote support by a remote operator. In the remote support, it is considered that a video image acquired by a monitoring camera is used together with a video image acquired by an onboard camera or instead of the video image acquired by the onboard camera. However, when there is a plurality of monitoring cameras, there is room for consideration as to which monitoring camera is used to acquire a video image. This is because the performance of remote support varies depending on the video image to be used. The above-described conventional technique does not provide any solution for selecting a monitoring camera in remote support.

The present disclosure has been made in view of the above problems. The present disclosure provides a technique capable of effectively utilizing a plurality of monitoring cameras for remote support of a vehicle.

To achieve the above objective, the present disclosure provides a remote support system for providing remote support to a vehicle. A remote support system includes a display device for displaying a video image to a remote operator, at least one processor, and at least one memory storing a plurality of instructions executable by the at least one processor. The plurality of instructions is configured to cause the at least one processor to perform the following processes. The first process is to acquire video images related to operation of the vehicle from a plurality of monitoring cameras installed on or near an operation route of the vehicle. The second processing is to select a video image to be displayed on the display device from among the video images acquired by the plurality of monitoring cameras based on information regarding current and future relative relationship between each of the plurality of monitoring cameras and the vehicle. The third process is to display the selected video images on the display device.

In order to achieve the above object, the present disclosure also provides a remote support method for providing remote support to a vehicle. The remote support method of the present disclosure includes the following steps. The first step is a step of acquiring video images related to operation of the vehicle from a plurality of monitoring cameras installed on or near an operation route of the vehicle. The second step is a step of selecting a video image to be displayed on a display device for a remote operator from among the video images acquired by the plurality of monitoring cameras based on information regarding current and future relative relationship between each of the plurality of monitoring cameras and the vehicle. The third step is a step of displaying the selected video on the display device.

In order to achieve the above object, the present disclosure further provides a remote support program for providing remote support to a vehicle. A remote support program according to the present disclosure is configured to cause a computer to execute the remote support method described above. The remote support program of the present disclosure may be recorded in a non-transitory computer-readable recording medium.

According to the technique of the present disclosure, it is possible to determine which monitoring camera is a monitoring camera that provides a more useful video image for performing remote support by taking into consideration not only the current relative relationship with the vehicle but also the future relative relationship with the vehicle with respect to the plurality of monitoring cameras. Thus, it is possible to select a video image useful for remote support from among video images acquired by the plurality of monitoring cameras and display the video image to the remote operator.

### BRIEF DESCRIPTION OF THE DRAWINGS

Fig. 1 is a block diagram showing a configuration of a remote driving system according to an embodiment of the present disclosure.
Fig. 2 is a diagram showing an example of installation of monitoring cameras.
Fig. 3 is a diagram showing an example of a method 1 for selecting a monitoring camera video image to be displayed on a display device.
Fig. 4 is a diagram showing an example of a method 2 for selecting a monitoring camera video image to be displayed on a display device.
Fig. 5 is a diagram showing an example of a method 3 for selecting a monitoring camera video image to be displayed on a display device.
Fig. 6 is a diagram showing an example of a method 4 for selecting a monitoring camera video image to be displayed on a display device.
Fig. 7 is a diagram showing an example of a method of switching a monitoring camera video image displayed on a display device.
Fig 8 is a diagram showing an example of switching of a monitoring camera video image displayed on a display device.
Fig. 9 is a diagram showing an example of a method 1 for processing a monitoring camera video image to be displayed on a display device.
Fig. 10 is a diagram showing an example of a method 2 for processing a monitoring camera video image to be displayed on a display device.
Fig. 11 is a diagram showing a modification of a method of displaying a monitoring camera video image.

### DETAILED DESCRIPTION

### 1. Configuration of Remote Driving System

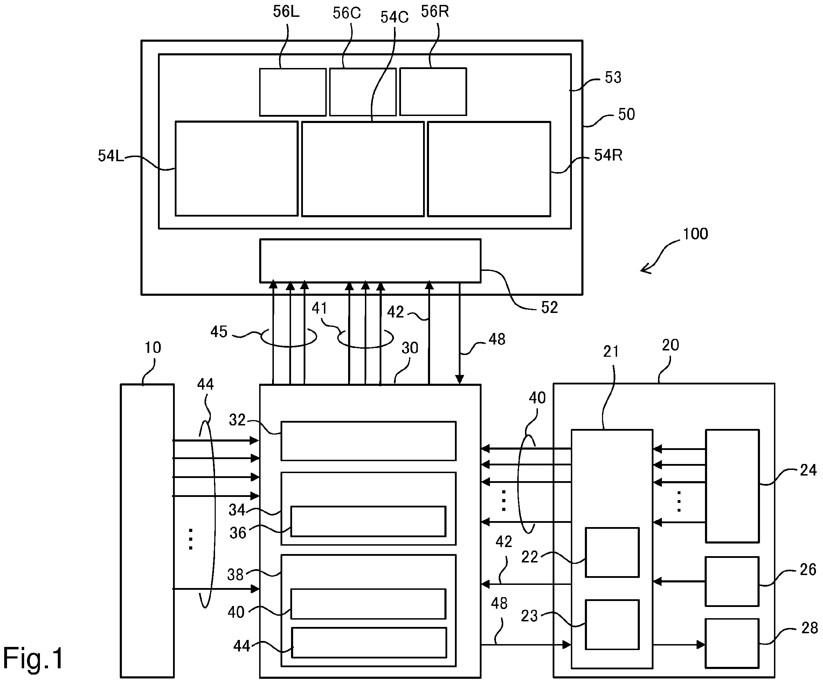

The remote support system of the present disclosure is applicable to any of a remote driving system that remotely drives a vehicle, a remote assistance system that remotely assists a vehicle, and a remote monitoring system that remotely monitors a vehicle. In the present embodiment, the remote support system of the present disclosure is applied to a remote driving system that remotely drives a vehicle. Fig. 1 is a block diagram showing a configuration of a remote driving system 100 according to the present embodiment. The remote driving system 100 according to the present embodiment includes a vehicle 20 equipped with an onboard camera 24, a monitoring camera 10, a management server 30, and a remote cockpit 50.

The vehicle 20 is a vehicle that supports remote driving. The vehicle 20 is provided with at least one onboard camera 24. The onboard camera 24 includes at least a camera that captures a video image of the front of the vehicle 20. Preferably, the onboard camera 24 includes a camera that captures a video image of the diagonally right front of the vehicle 20 and a camera that captures a video image of the diagonally left front of the vehicle 20. The onboard camera 24 may include a camera that captures a video image of the rear of the vehicle 20, a camera that captures a video image of the diagonally right rear of the vehicle 20, and a camera that captures a video image of the diagonally left rear of the vehicle 20.

The vehicle 20 includes an onboard computer 21. The onboard computer 21 includes a remote driving kit 22 for remote driving. The remote driving kit 22 is connected to a communication network by using wireless communication. The remote driving kit 22 transmits the onboard camera video image 40 captured by the onboard camera 24 to the management server 30 via the communication network. In addition, when the vehicle 20 is a vehicle having an automatic driving function, the onboard computer 21 includes an automatic driving kit 23 for automatic driving. The automatic driving kit 23 uses a video image captured by the onboard camera 24, particularly, a video image captured by a front camera, for recognition of surrounding objects for automatic driving.

The remote driving kit 22 acquires information regarding the state of the vehicle 20 such as a vehicle speed, a travel distance, and a remaining fuel amount from internal sensors 26 mounted on the vehicle 20. The remote driving kit 22 transmits the information acquired from the internal sensors 26 and the information acquired by the calculation by the onboard computer 21 to the management server 30 as vehicle information 42. The information obtained by the calculation includes information on a scheduled traveling route and a traveling direction of the vehicle 20.

The remote driving kit 22 receives a control amount command 48 for remote driving from the management server 30. The remote driving kit 22 controls actuators 28 of the vehicle 20 in accordance with the control amount command 48. The actuator 28 includes a driving actuator that drives the vehicle 20, a braking actuator that brakes the vehicle 20, and a steering actuator that steers the vehicle 20. When the automatic driving is performed, the control amount of each actuator 28 is calculated by the automatic driving kit 23 so that the vehicle 20 travels along a target trajectory.

The monitoring camera 10 is a monitoring camera as part of a social infrastructure structure, in particular a traffic infrastructure. A large number of monitoring cameras 10 are installed along a road. The monitoring camera 10 is a network camera connected to the communication network. The monitoring camera 10 transmits a captured video image to the management server 30 via the communication network.

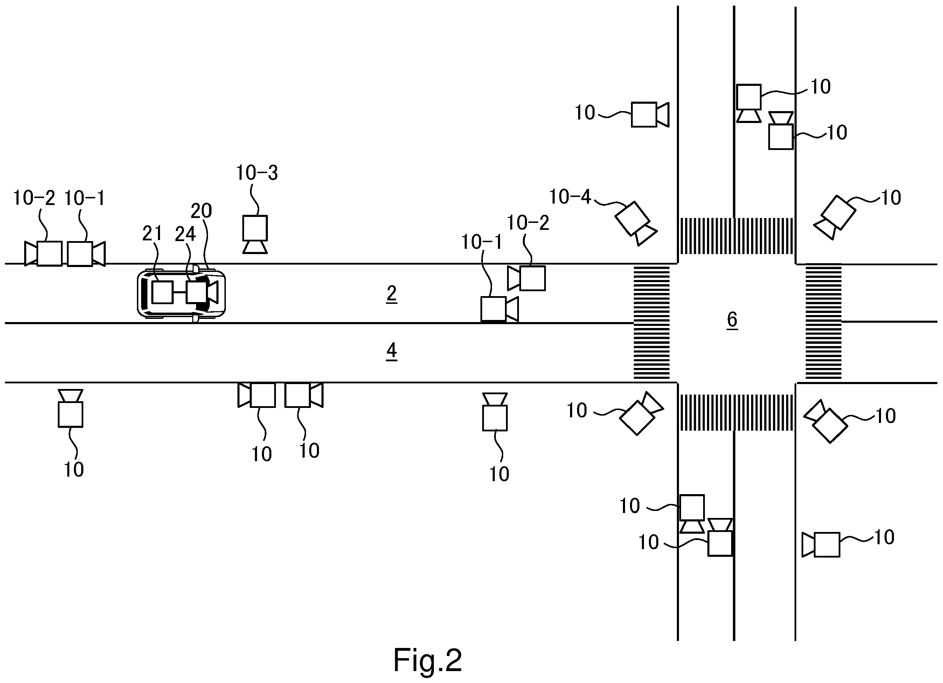

Here, an example of installation of the monitoring camera 10 will be described with reference to Fig. 2. As shown in Fig. 2, the monitoring camera 10 may be installed in various ways. For example, the monitoring camera 10 includes a camera 10-1 that is installed on or near the lane and captures a video image of the front of the lane and a camera 10-2 that is installed on or near the lane and captures a video image of the rear of the lane. Further, the monitoring camera 10 includes a camera 10-3 that is installed on a side of the lane and captures a video image of the lane from the side. However, the monitoring camera 10 related to the vehicle 20 is not limited to a camera installed on or near the lane 2 on which the vehicle 20 is traveling. A camera installed on or near the oncoming lane 4 may also be included in the monitoring camera 10 related to the vehicle 20. The monitoring camera 10 includes a camera 10-4 installed at the intersection 6 and capturing a video image of the inside of the intersection 6 in a diagonal direction.

Returning to Fig. 1, the configuration of the remote driving system 100 will be further described. The remote cockpit 50 is a cockpit for a remote operator to remotely operate the vehicle 20. A driving environment for the driver to manually drive the vehicle 20 is reproduced in the remote cockpit 50. The remote cockpit 50 is provided with a display device 53. The display device 53 is a device for reproducing a view outside the vehicle as viewed from the driver's seat of the vehicle 20. The display device 53 has a plurality of screens. The screens include main screens 54C, 54L, and 54R for displaying the video image captured by the onboard camera 24 and sub-screens 56C, 56L, and 56R for displaying the video image captured by the monitoring camera 10. The main screens include a central screen 54C for displaying a front video image, a left screen 54L for displaying a left diagonal front video image, and a right screen 54R for displaying a right diagonal front video image. However, the central screen 54C further displays a rear video image by the picture-in-picture method. In the same manner, the left screen 54L further displays a left diagonal rear video image, and the right screen 54R further displays a right diagonal rear video image. The sub-screens include three screens, i.e., a central screen 56C, a left screen 56L, and a right screen 56R. However, the number of sub-screens may be two or one.

The remote cockpit 50 includes a controller 52. The display contents of the display device 53 are controlled by the controller 52. The controller 52 is connected to the management server 30. The controller 52 displays the onboard camera video image 41 transmitted from the management server 30 on the main screens 54C, 54L, and 54R, and displays the monitoring camera video image 45 transmitted from the management server 30 on the sub-screens 56C, 56L, and 56R. The controller 52 has a function of receiving the vehicle information 42 from the management server 30 and presenting the received vehicle information 42 to the remote operator. Further, the controller 52 has a function of transmitting the control amount command 48 input by the remote operator to the management server 30.

The management server 30 comprises a processor 32 and a program memory 34 communicatively coupled to the processor 32. The number of processors 32 and the number of program memories 34 constituting the management server 30 may be plural. The program memory 34 is a computer-readable recording medium. The program memory 34 stores at least one program executable by the processor 32. The program comprises a plurality of instructions 36. The instructions 36 stored in the program memory 34 include instructions for causing the processor 32 to implement the remote support method of the present disclosure. The instructions correspond to the remote support program of the present disclosure.

The management server 30 comprises a video image memory 38 communicatively coupled to the processor 32. The onboard camera video image 40 received from the onboard computer 21 and the monitoring camera video image 44 received from the monitoring camera 10 are stored in the video image memory 38. The processor 32 reads the onboard camera video image 40 stored in the video image memory 38, and generates the onboard camera video image 41 to be displayed on the main screens 54C, 54L, and 54R. The onboard camera video image 41 may be the onboard camera video image 40 itself, or may be the onboard camera video image 40 processed as necessary. The processor 32 reads out a video image selected from the many monitoring camera video images 44 stored in the video image memory 38 according to a predetermined rule, and generates the monitoring camera video image 45 to be displayed on the sub-screens 56C, 56L, and 56R. The monitoring camera video image 45 may be the monitoring camera video image 44 itself, or may be the monitoring camera video image 44 processed as necessary. The function of selecting a monitoring camera video image to be displayed from among the plurality of monitoring camera video images 44 and processing the selected video image as necessary may be provided in the controller 52 instead of the management server 30.

### 2. Selection of Monitoring Camera Video

As in the example illustrated in Fig. 2, there are a large number of monitoring cameras 10 related to the vehicle 20, and a large number of monitoring camera video images 44 are input to the management server 30. On the other hand, in the example shown in Fig. 1, the number of monitoring camera video images that can be displayed on the display device 53 is three at most. If the number of screens is increased, the number of monitoring camera video images that can be displayed is also increased. However, there is a physical limit to the number of screens, and increasing the number of screens too much may result in too much information for the remote operator. Therefore, it is necessary to select a monitoring camera video image useful for the remote operator from among a large number of monitoring camera video images.

The selection of the monitoring camera video image is performed based on information on the current and future relative relationship between the vehicle 20 and each monitoring camera 10 related to the vehicle 20. By taking into consideration not only the current relative relationship with the vehicle 20 but also the future relative relationship with the vehicle 20 with respect to the plurality of monitoring cameras 10, it becomes clear which monitoring camera is a monitoring camera that provides a more useful video image for performing remote driving. As a result, it is possible to select a video image useful for remote driving from the plurality of monitoring camera video images 44. A method of selecting a monitoring camera video image will be described below.

### <Selection Method 1>

The video image displayed on the display device 53 according to the selection method 1 is a video image in which the area where the vehicle 20 is scheduled to pass is shown. According to the selection method 1, as the information regarding the current and future relative relationship between each monitoring camera 10 and the vehicle 20, the scheduled passing time at which the vehicle 20 passes through the visual field of each monitoring camera 10 is referred to. Then, the video image of the monitoring camera in which the area where the vehicle 20 is scheduled to pass within a predetermined time is included in the visual field is preferentially selected.

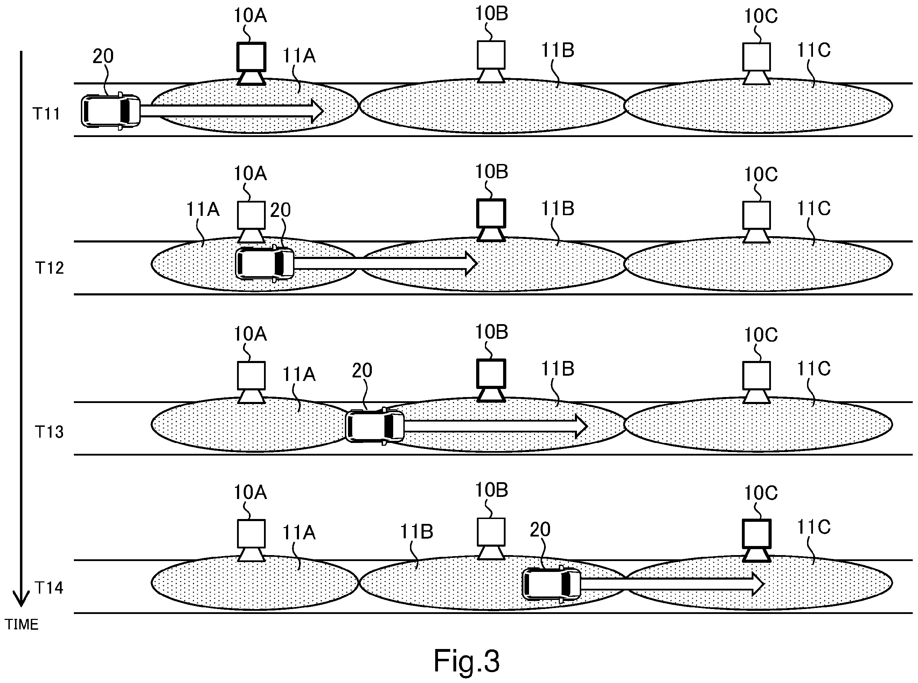

Fig. 3 is a diagram illustrating a specific example of the selection method 1. In Fig. 3, three monitoring cameras 10A, 10B, and 10C are installed along the road. The monitoring cameras 10A, 10B, and 10C have visual fields 11A, 11B, and 11C, respectively. The vehicle 20 travels on the road. Fig. 3 shows the positions of the vehicle 20 on the road at times T11, T12, T13, and T14. In addition, the area through which the vehicle 20 is scheduled to pass within the predetermined time at each time is indicated by an arrow line in the figure. The predetermined time is set based on, for example, the reaction time of the remote operator to a change in the surrounding environment. Therefore, the area where the vehicle 20 is scheduled to pass within the predetermined time can be rephrased as an area where the vehicle 20 is scheduled to pass in the near future.

At time T11, the passing scheduled area of the vehicle 20 is included only in the visual field 11A of the monitoring camera 10A. Therefore, at time T11, the video image acquired by the monitoring camera 10A is preferentially selected.

At time T12, a part of the passing scheduled area of the vehicles 20 enters the visual field 11B of the monitoring camera 10B, and the remaining part enters the visual field 11A of the monitoring camera 10A. In this case, a monitoring camera having a larger passing scheduled area in the visual field is prioritized. In addition, in a case where the sizes of the scheduled passing areas included in the visual fields are the same between the monitoring cameras, for example, a monitoring camera installed further forward, that is, a monitoring camera in which a future scheduled passing area is included in the visual field is prioritized. Therefore, at time T12, the video image acquired by the monitoring camera 10B is preferentially selected.

At time T13, the passing scheduled area of the vehicle 20 is included only in the visual field 11B of the monitoring camera 10B. Therefore, at time T13, the video image acquired by the monitoring camera 10B is preferentially selected.

At time T14, most of the passing scheduled area of the vehicles 20 is within the visual field 11C of the monitoring camera 10C, and a part of the remaining area is within the visual field 11B of the monitoring camera 10B. Therefore, at time T14, the video image acquired by the monitoring camera 10C is preferentially selected.

As in the above example, the video image of the monitoring camera in which the passing scheduled area of the vehicle 20 in the near future is included in the visual field is preferentially selected, and thus the remote operator can remotely drive the vehicle 20 while predicting a situation that may occur in the vehicle 20.

### <Selection Method 2>

The video image displayed on the display device 53 according to the selection method 2 is a video image in which the area where the vehicle 20 is scheduled to pass is shown. According to the selection method 2, as the information regarding the current and future relative relationship between each monitoring camera 10 and the vehicle 20, the distance from a predetermined area on the operation route of the vehicle 20 to the vehicle 20 is referred to. Then, when the vehicle 20 approaches a point at a predetermined distance from the predetermined area, the video image of the monitoring camera in which the predetermined area is included in the visual field is preferentially selected. The predetermined area can be arbitrarily set, but is preferably an area to which the remote operator needs to pay particular attention. Intersections, pedestrian crossings, curved roads with poor visibility, locations with frequent accidents, etc. are examples of such areas.

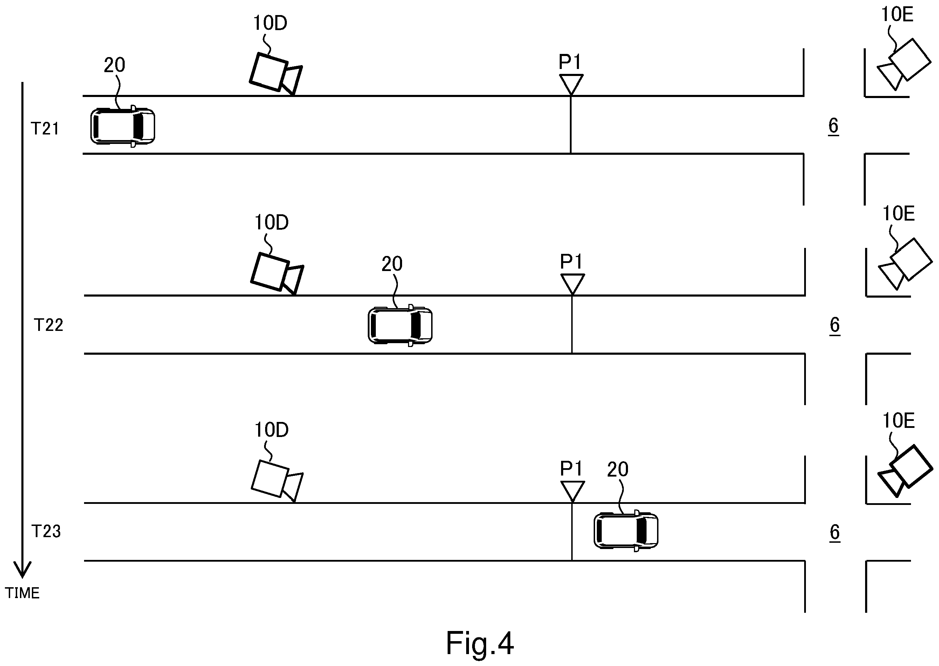

Fig. 4 is a diagram illustrating a specific example of the selection method 2. In Fig. 4, a monitoring camera 10D is installed on the road on which the vehicle 20 is traveling, and a monitoring camera 10E is also installed at the intersection 6 located ahead. The visual field of the monitoring camera 10D includes an area up to the intersection. The visual field of the monitoring camera 10E includes the entire intersection. Fig. 4 shows the positions of the vehicle 20 on the road at times T21, T22, and T23. A point P1 at a predetermined distance from the intersection 6 is shown in the figure. The predetermined distance is set based on, for example, the time required for the remote operator to check safety when the remote operator causes the vehicle 20 to enter the intersection 6.

At time T21, the vehicle 20 has not reached the point P1. Therefore, at time T21, the video image acquired by the monitoring camera 10D is preferentially selected. At time T22, the vehicle 20 has not reached the point P1. Therefore, even at time T22, the video image acquired by the monitoring camera 10D is preferentially selected.

At time T23, the vehicle 20 has reached the point P1. Therefore, at time T23, the video image acquired by the monitoring camera 10E is preferentially selected. Thus, the remote operator can remotely drive the vehicle 20 while checking the situation of the intersection 6, and cause the vehicle 20 to safely pass through the intersection 6.

### <Selection Method 3>

The video image displayed on the display device 53 according to the selection method 3 is a video image in which the vehicle 20 is shown. According to the selection method 3, as the information regarding the current and future relative relationship between each monitoring camera 10 and the vehicle 20, the time during which the vehicle 20 is in the visual field of each monitoring camera 10 is referred to. Then, the video image of the monitoring camera having a longer time in which the vehicle 20 is in the visual field is preferentially selected.

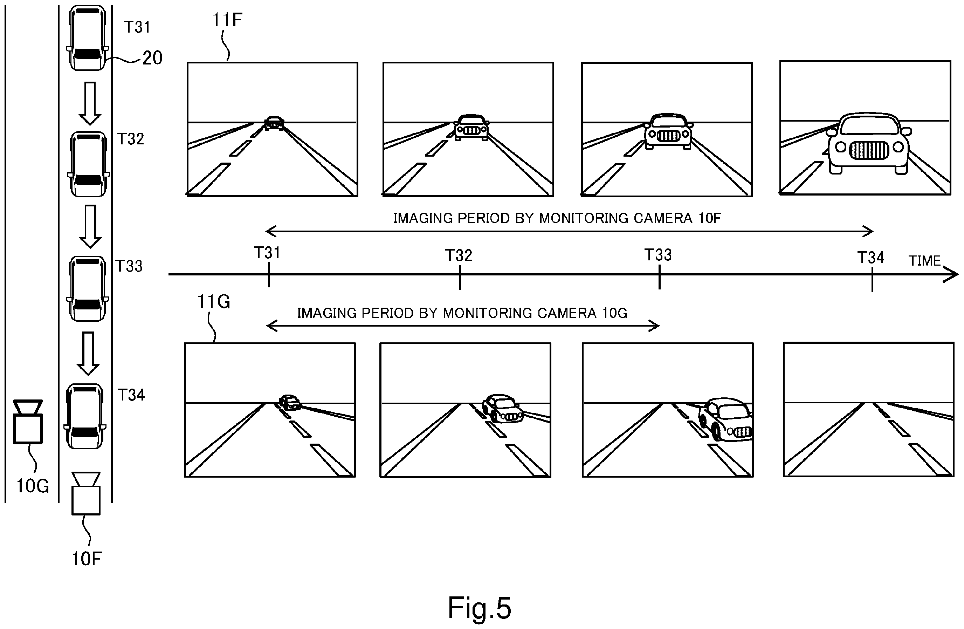

Fig. 5 is a diagram for explaining a specific example of the selection method 3. In Fig. 5, a monitoring camera 10F is installed in the lane in which the vehicle 20 is traveling, and a monitoring camera 10G is also installed in the opposite lane. The monitoring camera 10F is a camera that captures a video image of the rear of the own lane, and the monitoring camera 10G is a camera that captures a video image of the front of the oncoming lane. The monitoring camera 10F is installed in front of the monitoring camera 10G in the traveling direction when viewed from the vehicle 20.

The period during which the vehicle 20 is in the visual field 11F of the monitoring camera 10F is a period from time T31 to time T34. On the other hand, the period during which the vehicle 20 is in the visual field 11G of the monitoring camera 10G is a period from time T31 to time T33. Therefore, at least during the period from time T31 to time T34, the video image acquired by the monitoring camera 10F is preferentially selected.

As described above, the video image of the monitoring camera in which the vehicle 20 is displayed for a longer time is preferentially selected, and thus it is possible to reduce the frequency of switching the video image on the display device 53. As a modification of the selection method 3, the priority of the video image of the monitoring camera in which the time during which the vehicle 20 is in the visual field is longer may be set to be higher as the speed of the vehicle 20 is higher. The higher the vehicle speed, the shorter the time during which the vehicle 20 is captured by one monitoring camera. Therefore, the modification can reduce the frequency of switching the video image when the vehicle 20 is moving at high speed

### <Selection Method 4>

The video image displayed on the display device 53 according to the selection method 4 is a video image in which the vehicle 20 is shown. According to the selection method 4, as the information regarding the current and future relative relationship between each monitoring camera 10 and the vehicle 20, the ratio of the visual field of each monitoring camera 10 occupied by the vehicle 20 is referred to. Then, the video image of the monitoring camera in which the ratio of the visual field occupied by the vehicle 20 is equal to or greater than the first predetermined ratio and less than the second predetermined ratio is preferentially selected.

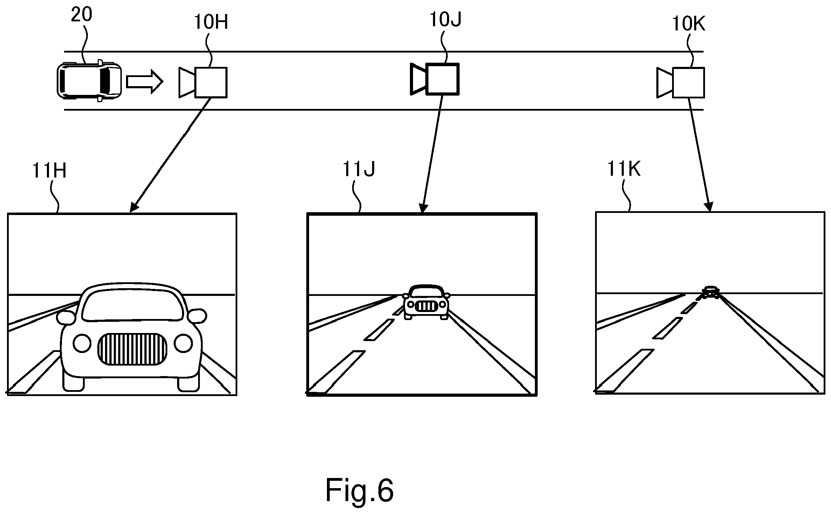

Fig. 6 is a diagram illustrating a specific example of the selection method 4. In Fig. 6, three monitoring cameras 10H, 10J, and 10K are installed along the road. In this example, the ratio of the visual field 11H of the monitoring camera 10H occupied by the vehicle 20 is equal to or greater than the second predetermined ratio. The ratio of the visual field 11K of the monitoring camera 10K occupied by the vehicle 20 is less than the first predetermined ratio. Only the ratio of the visual field 1 1J of the monitoring camera 10J occupied by the vehicle 20 is equal to or greater than the first predetermined ratio and less than the second predetermined ratio. Therefore, the video image acquired by the monitoring camera 10J is preferentially selected.

When the vehicle 20 further advances, the ratio of the visual field 1 1J of the monitoring camera 10J occupied by the vehicle 20 increases to the second predetermined ratio or more, and the ratio of the visual field 11K of the monitoring camera 10K occupied by the vehicle 20 increases to the first predetermined ratio or more and less than the second predetermined ratio. In this case, the video image acquired by the monitoring camera 10J is preferentially selected instead of the video image acquired by the monitoring camera 10K.

If the ratio of the visual field occupied by the vehicle 20 is too small, it is difficult to recognize the state of the vehicle 20 and the situation in which the vehicle 20 is placed. On the other hand, when the ratio of the visual field occupied by the vehicle 20 is too large, information useful for remote driving, particularly, the situation around the vehicle 20 cannot be acquired from the video image of the monitoring camera. The first predetermined ratio and the second predetermined ratio are set to values that allow the state of the vehicle 20 and the situation around the vehicle 20 to be recognized from the video image of the monitoring camera.

### <Selection Method 5>

The video image displayed on the display device 53 according to the selection method 5 is a video image in which the vehicle 20 is shown. According to the selection method 5, the camera direction of each monitoring camera 10 with respect to the vehicle 20 is referred to. Then, a video image of a monitoring camera that captures a video image of the vehicle 20 from a specific direction, for example, from the rear, is preferentially selected. The video image acquired by capturing the vehicle 20 from the rear side is less uncomfortable for the remote operator to drive while viewing the video image.

### <Selection Method 6>

The video image displayed on the display device 53 according to the selection method 6 is a video image showing the surroundings of the vehicle 20. According to the selection method 6, the difference between the visual field of each monitoring camera 10 and the visual field of the onboard camera 24 is referred to. For example, the video image of the monitoring camera in which a place that is difficult to see or a place that is a blind spot in the video image of the onboard camera 24 is captured is preferentially selected.

### <Selection Method Based on Other Information>

The video image of the monitoring camera in which the target approaching the course of the vehicle 20 or the target that is likely to move in or near the course is captured may be preferentially selected.

### 3. Display of Monitoring Camera Video Image on Display Device

In the present embodiment, the video image of the monitoring camera is selected by any of the above-described selection methods. Each monitoring camera is associated with any one of the three sub-screens 56C, 56L, and 56R according to a predetermined distribution rule. The display destination of the video image of the selected monitoring camera, that is, the screen on which the video image of the selected monitoring camera is displayed is determined in advance for each monitoring camera. If it is known in advance which video image of which monitoring camera is displayed on which screen, the remote operator can understand without confusion what kind of video image is displayed on each screen.

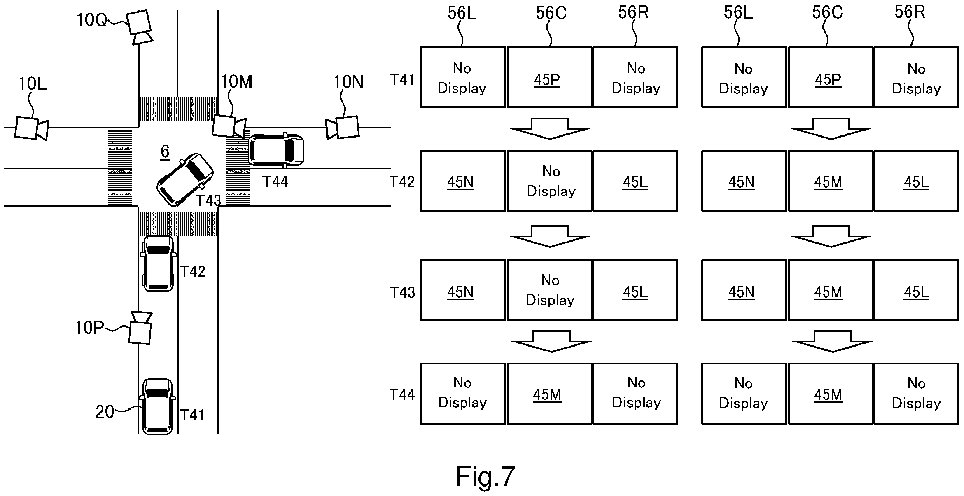

Here, the example shown in Fig. 7 will be examined. In this example, a plurality of monitoring cameras 10L, 10M, 10N, 10P, and 10Q are installed in a section up to the intersection 6 and around the intersection 6. The monitoring camera 10L is installed on the left side of the intersection 6 and captures a video image in the right direction. The monitoring camera 10N is installed on the right side of the intersection 6 and captures a video image of the left direction. The monitoring camera 10M is installed at the right corner of the intersection 6 and captures a video image in the right direction. The monitoring camera 10P is installed in front of the intersection 6 and captures a video image of the front in the direction of entering the intersection 6. The monitoring camera 10Q is installed behind the intersection 6 and captures a video image of the rear in the direction of entering the intersection 6.

In the present embodiment, the video images of the monitoring cameras displayed on the sub-screens 56C, 56L, and 56R of the display device 53 are changed according to the distance of the vehicle 20 to the intersection 6 and the traveling route passing through the intersection 6. Thus, the video images useful for the remote driving can be displayed to the remote operator in an optimum way using the plurality of screens.

Fig. 7 shows an example of transition of the monitoring camera video images displayed on the three sub-screens 56C, 56L, and 56R when the vehicle 20 traveling straight turns right at the intersection 6. Fig. 7 shows two examples.

First, the example on the left side of Fig. 7 will be described. At time T41 when the vehicle 20 is far from the intersection 6, the video image 45P of the monitoring camera 10P is displayed on the central screen 56C. No video image is displayed on the left screen 56L and the right screen 56R.

At time T42 when the vehicle 20 approaches the entrance of the intersection 6, the video image of the center screen 56C is turned off. On the other hand, the video image 45N of the monitoring camera 10N is displayed on the left screen 56L, and the video image 45L of the monitoring camera 10L is displayed on the right screen 56R. These video images 45N and 45L are video images in which the situation of the place where the vehicle 20 enters when the vehicle 20 turns right at the intersection 6 is best reflected, that is, video images in which the place to be watched when the vehicle 20 turns right at the intersection 6 can be best observed.

At time T43 when the vehicle 20 reaches the vicinity of the center of the intersection 6, the video image of the center screen 56C remains turned off. Further, the video image 45N of the monitoring camera 10N is continuously displayed on the left screen 56L, and the video image 45L of the monitoring camera 10L is continuously displayed on the right screen 56R.

At time T44 when the vehicle 20 passes through the intersection 6, the video image 45M of the monitoring camera 10M is displayed on the central screen 56C. On the other hand, the video image of the left screen 56L and the right screen 56R is turned off.

Next, the example on the right side of Fig. 7 will be described. At time T41 when the vehicle 20 is far from the intersection 6, the video image 45P of the monitoring camera 10P is displayed on the central screen 56C. No video image is displayed on the left screen 56L and the right screen 56R.

At time T42 when the vehicle 20 approaches the entrance of the intersection 6, the video image 45N of the monitoring camera 10N is displayed on the left screen 56L, and the video image 45L of the monitoring camera 10L is displayed on the right screen 56R. Further, the video image in the central screen 56C is switched from the video image 45P of the monitoring camera 10P to the video image 45M of the monitoring camera 10M.

At time T43 when vehicle 20 reaches the vicinity of the center of intersection 6, the video image 45M of the monitoring camera 10M is continuously displayed on the center screen 56C. Further, the video image 45N of the monitoring camera 10N is continuously displayed on the left screen 56L, and the video image 45L of the monitoring camera 10L is continuously displayed on the right screen 56R.

At time T44 when the vehicle 20 passes through the intersection 6, the video images of the left screen 56L and the right screen 56R are turned off. On the other hand, the video image 45M of the monitoring camera 10M is continuously displayed on the central screen 56C. That is, after the vehicle 20 enters the intersection 6, the video image 45M of the monitoring camera 10M is continuously displayed on the center screen 56C. This makes it possible to reduce the frequency of switching the display of the video image.

Although the above description is made on the assumption that the display device 53 is provided with the three sub-screens 56C, 56L, and 56R, there may be a case where only one screen is provided to display the monitoring camera video image. In this case, the monitoring camera video image is selected in the following priority order, for example.

In the case where the vehicle 20 travels straight, turns right, or turns left at the intersection 6, if the vehicle speed is high or low, the priorities of the monitoring camera video images are, for example, monitoring camera 10P, monitoring camera 10Q, and monitoring camera 10L and monitoring camera 10N in descending order of priorities. This means that, when the monitoring camera 10P exists, the video image of the monitoring camera 10P is displayed, and when the monitoring camera 10P does not exist, the video image of the monitoring camera 10Q is displayed. The monitoring camera 10L and the monitoring camera 10N have the same priorities.

When the vehicle 20 turns right at the intersection 6 at a medium speed, the monitoring camera 10N is prioritized over the monitoring camera 10L in comparison between the monitoring camera 10N and the monitoring camera 10L. When the vehicle 20 turns right at the intersection 6, the place to be watched is hidden behind the vehicle 20 in the monitoring camera 10L, but the monitoring camera 10N can acquire the video image in which the place to be watched is not hidden behind the vehicle 20 when the vehicle 20 turns right.

In comparison between the monitoring camera 10M and the monitoring camera 10N, the monitoring camera 10M is prioritized over the monitoring camera 10N. Since the video image of the monitoring camera 10M is the video image in which the situation of the place where the vehicle 20 enters by turning right at the intersection 6 is most clearly shown, it is preferable to preferentially select the video image when turning right. In comparison among the monitoring camera 10L, the monitoring camera 10P, and the monitoring camera 10Q, the priorities are higher in the order of the monitoring camera 10L, the monitoring camera 10P, and the monitoring camera 10Q.

When the vehicle 20 travels straight at the intersection 6 at a medium speed, an example of the priorities of the monitoring camera video images is the monitoring camera 10N and the monitoring camera 10L, the monitoring camera 10P, and the monitoring camera 10Q in descending order of priorities. The monitoring camera 10L and the monitoring camera 10N have the same priorities.

### 4. Processing of Monitoring Camera Video Image

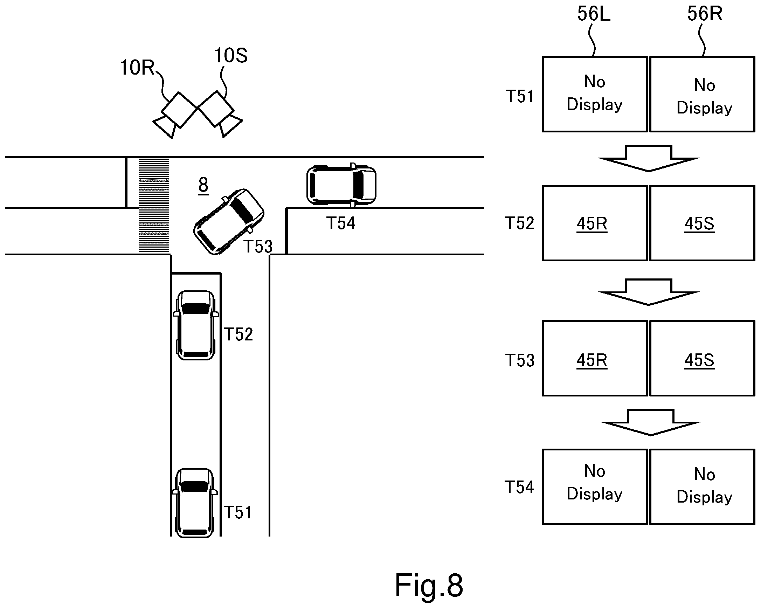

The monitoring camera video image displayed on the display device 53 is processed as necessary. For example, an example of processing of the monitoring camera video image in a case where the monitoring camera video image is switched as illustrated in Fig. 8 will be described. In the example shown in Fig. 8, two monitoring cameras 10R and 10S are installed at an intersection (T-junction) 8. The monitoring camera 10R is installed at the end of the intersection 8 and captures a video image of the left side of the intersection 8. The monitoring camera 10S is installed at the end of the intersection 8 and captures a video image of the right side of the intersection 8.

Fig. 8 shows an example of transition of the monitoring camera video images displayed on the two sub-screens 56L and 56R when the vehicle 20 traveling straight turns right at the intersection 8. At time T51 when the vehicle 20 is far from the intersection 8, no video image is displayed on the left screen 56L and the right screen 56R. At time T52 when the vehicle 20 approaches the entrance of the intersection 8, the video image 45R of the monitoring camera 10R is displayed on the left screen 56L, and the video image 45S of the monitoring camera 10S is displayed on the right screen 56R. At time T53 when the vehicle 20 reaches the vicinity of the center of the intersection 8, the video image 45R of the monitoring camera 10R is continuously displayed on the left screen 56L, and the video image 45S of the monitoring camera 10S is continuously displayed on the right screen 56R. At time T54 when the vehicle 20 passes through the intersection 8, the video images of the left screen 56L and the right screen 56R are turned off.

### <Processing Method 1>

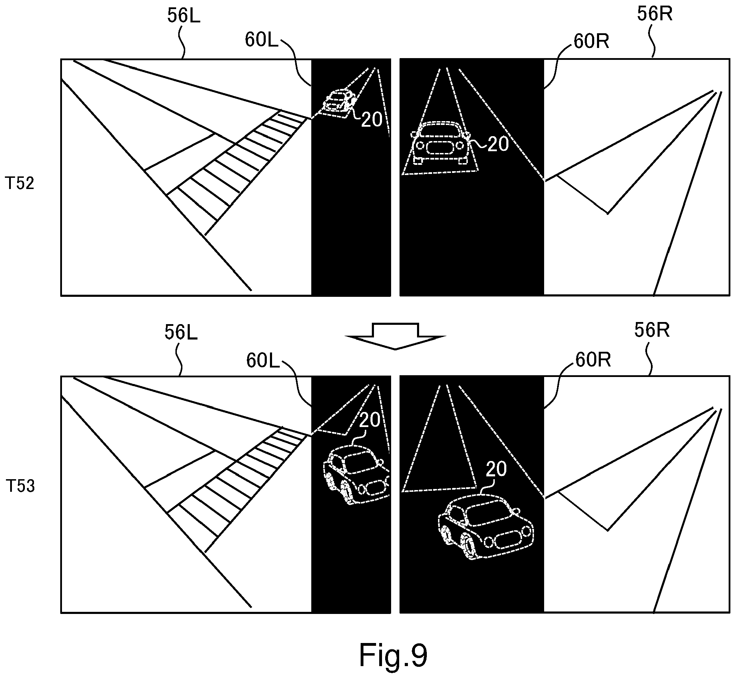

Fig. 9 is a diagram showing an example of the processing method 1 of the monitoring camera video image displayed on the display device 53. Fig. 9 corresponds to the monitoring camera video image displayed on the left screen 56L and the monitoring camera video image displayed on the right screen 56R in the example shown in Fig. 8. However, in the example shown in Fig. 9, the processing of horizontally reversing the monitoring camera video image of the left screen 56L and the monitoring camera video image of the right screen 56R is performed.

Judging from the visual fields of the monitoring cameras 10R and 10S, the vehicles 20 entering the intersection 8 should be shown on both the left screen 56L and the right screen 56R at each of time T52 and time T53. However, according to the processing method 1, the processing of hiding the vehicle 20 with the mask 60L and the mask 60R is performed on the respective monitoring camera video images of the left screen 56L and the right screen 56R.

At the intersection 8 where the traveling direction of the vehicle 20 changes, the remote operator is likely to be confused when the vehicle 20 remotely drives while viewing the video image captured from the outside. By hiding the vehicle 20 with the mask 60L and the mask 60R, it is possible to prevent the remote operator from being confused while leaving information useful for remote driving included in the monitoring camera video image. Instead of hiding the vehicle 20 by the mask processing, the vehicle 20 may be removed from the monitoring camera video image using the image processing application.

### <Processing Method 2>

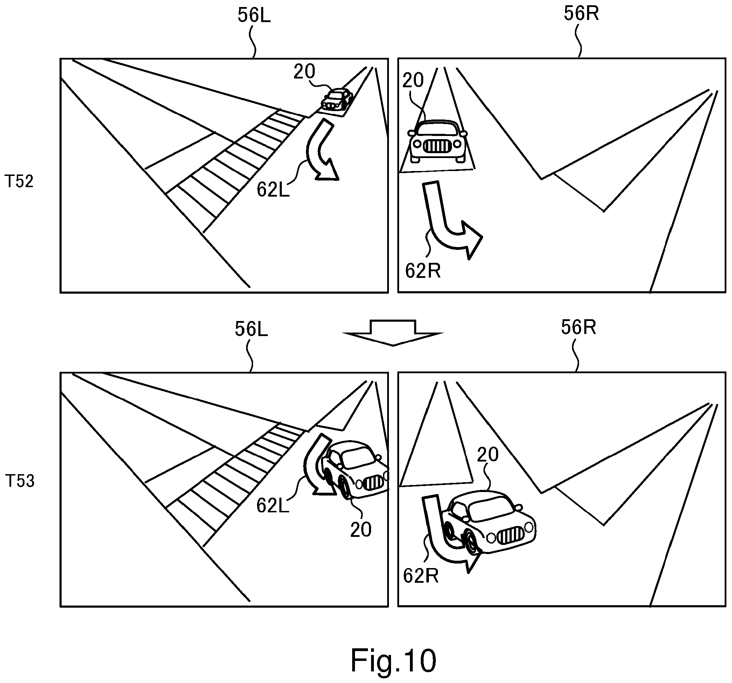

Fig. 10 is a diagram showing an example of the processing method 2 of the monitoring camera video image displayed on the display device 53. Fig. 10 corresponds to the monitoring camera video image displayed on the left screen 56L and the monitoring camera video image displayed on the right screen 56R in the example shown in Fig. 8. However, in the example illustrated in Fig. 10, the processing of horizontally reversing the monitoring camera video image of the left screen 56L and the monitoring camera video image of the right screen 56R is performed.

According to the processing method 2, the vehicle 20 is not hidden so that the relationship between the vehicle 20 and the surroundings can be seen. However, in order to recognize the traveling direction of the vehicle 20 at the intersection 8, processing is performed to superimpose and display AR-arrows 62L and 62R indicating the traveling direction of the vehicle 20 on the respective monitoring camera video images of the left screen 56L and the right screen 56R. The remote operator can intuitively understand the direction of the vehicle 20 from the arrows 62L and 62R, and thus can reduce confusion caused by the vehicle 20 being reflected in the screen 56L and 56R.

If the vehicle 20 is slow, the remote operator is allowed a longer confusion time. Therefore, the processing by the processing method 2 may be performed when the speed of the vehicle 20 is less than a predetermined speed, and the processing by the processing method 1 may be performed when the speed of the vehicle 20 is equal to or greater than the predetermined speed.

### 5. Modification of Display Method of Monitoring Camera Video Image

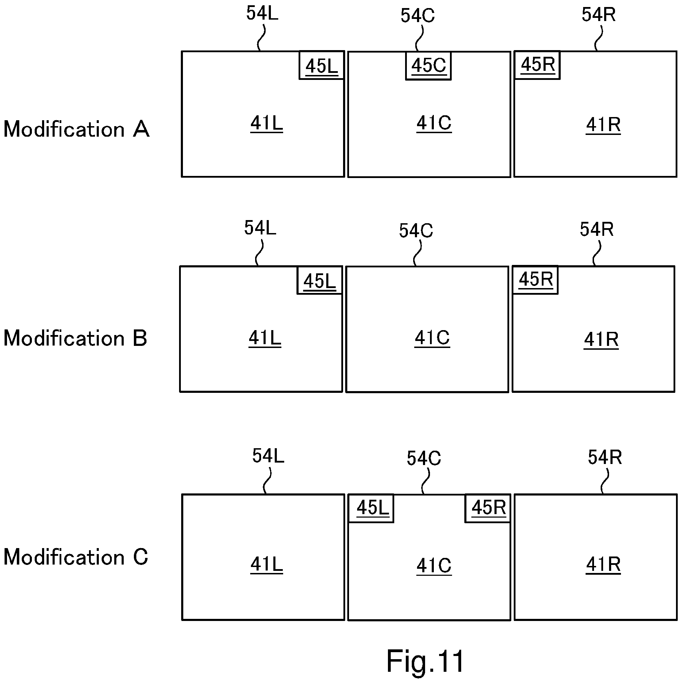

Fig. 11 is a diagram showing a modification of the method of displaying the monitoring camera video image. In the modification A, the monitoring camera video images 45C, 45L, and 45R are displayed in a superimposed manner on the onboard camera video images 41C, 41L, and 41R on the three screens 54C, 54L, and 53R. In the modification B, the monitoring camera video images 45L and 45R are displayed in a superimposed manner on the onboard camera video images 41L and 41R on the left and right screens 54L and 54R. In the modification C, the two monitoring camera video images 45L and 45R are superimposed on the onboard camera video image 41C on the central screen 54C. The position at which the monitoring camera video image is displayed on each screen is preferably a position in a blind spot in the onboard camera video image or a position of a reflecting mirror of the vehicle 20.

By displaying the monitoring camera video image on the onboard camera video image in a superimposed manner, the remote operator can view the monitoring camera video image while viewing the onboard camera video image. The monitoring camera video image may be displayed in a superimposed manner on the onboard camera video image only during a period from when the vehicle 20 approaches the intersection to when the vehicle 20 passes through the intersection. By performing the superimposed display of the monitoring camera video image only in a scene in which remote driving is particularly necessary, it is possible to reduce the calculation load of the processor 32 while preventing the video image superimposed and displayed on the onboard camera video image from interfering with the remote operator.

## Claims

1. A remote support system for providing remote support to a vehicle (20), the remote support system comprising:
a display device (53) for displaying a video image to a remote operator;
at least one processor (32); and
at least one memory (34) storing a plurality of instructions (36) executable by the at least one processor (32), the plurality of instructions (36) being configured to cause the at least one processor (32) to
acquire video images related to operation of the vehicle (20) from a plurality of monitoring cameras (10) installed on or near an operation route of the vehicle (20),
select a video image to be displayed on the display device (53) from among the video images acquired by the plurality of monitoring cameras (10) based on information regarding current and future relative relationship between each of the plurality of monitoring cameras (10) and the vehicle (20), and
display the selected video image on the display device (53).

2. The remote support system according to claim 1, wherein
the video images related to the operation of the vehicle (20) include a video image showing an area through which the vehicle (20) is scheduled to pass, and
the selecting the video image to be displayed on the display device (53) includes preferentially selecting a video image of a monitoring camera whose visual field (11) includes an area through which the vehicle is scheduled to pass within a predetermined time.

3. The remote support system according to claim 1, wherein
the video images related to the operation of the vehicle (20) include a video image showing an area through which the vehicle (20) is scheduled to pass, and
the selecting the video images to be displayed on the display device includes preferentially selecting a video image of a monitoring camera whose visual field (11) includes a predetermined area on the travel route when the vehicle (20) approaches a point at a predetermined distance from the predetermined area.

4. The remote support system according to claim 1, wherein
the video images related to the operation of the vehicle (20) include a video image in which the vehicle (20) is captured, and
the selecting the video image to be displayed on the display device (53) includes preferentially selecting a video image of a monitoring camera having a longer time period during which the vehicle (20) is in a visual filed.

5. The remote support system according to claim 4, wherein
the plurality of instructions (36) is configured to cause the at least one processor (32) to
increase priority of the video image of the monitoring camera having a longer time period during which the vehicle (20) is in the visual field (11) as a speed of the vehicle increases.

6. The remote support system according to claim 1, wherein
the video images related to the operation of the vehicle (20) include a video image in which the vehicle (20) is captured, and
the selecting the video image to be displayed on the display device (53) includes preferentially selecting a video image of a monitoring camera in which a ratio of a visual field (11) occupied by the vehicle (20) is equal to or greater than a first predetermined ratio and less than a second predetermined ratio.

7. The remote support system according to claim 1, wherein
the display device (53) includes a plurality of screens (54L, 54C, 54R, 56L, 56C, 56R), and
the plurality of instructions (36) is configured to cause the at least one processor (32) to
associate each of the plurality of monitoring cameras (10) with any of the plurality of screens (54L, 54C, 54R, 56L, 56C, 56R) in accordance with a predetermined distribution rule, and
select, for each of the plurality of screens (54L, 54C, 54R, 56L, 56C, 56R), a video image to be displayed from among the video images acquired by the associated monitoring cameras (10).

8. The remote support system according to claim 1, wherein
the plurality of instructions (36) is configured to cause the at least one processor (32) to
change a display mode of displaying the selected video image on the display device (53) according to the current and future relative relationship between the monitoring camera (10) that has captured the selected video image and the vehicle (20).

9. The remote support system according to claim 8, wherein
the display device (53) includes a plurality of screens (54L, 54C, 54R, 56L, 56C, 56R),
the selected video image includes a plurality of selected video images, and
the plurality of instructions (36) is configured to cause the at least one processor (32) to
change arrangement of the plurality of selected video images on the plurality of screens (54L, 54C, 54R, 56L, 56C, 56R) according to the current and future relative relationship between the monitoring camera (10) corresponding to each of the plurality of selected video images and the vehicle (20).

10. The remote support system according to claim 1, wherein
the plurality of instructions (36) is configured to cause the at least one processor (32) to
perform processing for removing the vehicle (20) or processing for hiding the vehicle (20) on a video image in which the vehicle (20) is shown among the selected video images.

11. The remote support system according to claim 10, wherein
the plurality of instructions (36) is configured to cause the at least one processor (32) to
display, on the display device (53), a video image in which the vehicle (20) is not shown during a period from when the vehicle (20) approaches an intersection to when the vehicle (20) passes through the intersection.

12. The remote support system according to claim 11, wherein
the plurality of instructions (36) is configured to cause the at least one processor (32) to
display the video image in which the vehicle (20) is not shown on the display device (53) when a speed of the vehicle (20) is equal to or higher than a predetermined speed, and
display the video image in which the vehicle (20) is shown on the display device (53) when the speed of the vehicle (20) is lower than the predetermined speed.

13. The remote support system according to claim 12, wherein
the plurality of instructions (36) is configured to cause the at least one processor (32) to
when displaying the video image in which the vehicle (20) is shown on the display device (53), display an arrow indicating a traveling direction of the vehicle (20) at the intersection on the display device (53) in a superimposed manner.

14. A remote support method for providing remote support to a vehicle (20), the remote support method comprising:
acquiring video images related to operation of the vehicle (20) from a plurality of monitoring cameras (10) installed on or near an operation route of the vehicle (20);
selecting a video image to be displayed on a display device (53) for a remote operator from among the video images acquired by the plurality of monitoring cameras (10) based on information regarding current and future relative relationship between each of the plurality of monitoring cameras (10) and the vehicle (20); and
displaying the selected video image on the display device (53).

15. A remote support program for providing remote support to a vehicle (20), the remote support program causing a computer (30) to execute:
acquiring video images related to operation of the vehicle (20) from a plurality of monitoring cameras (10) installed on or near an operation route of the vehicle (20);
selecting a video image to be displayed on a display device (53) for a remote operator from among the video images acquired by the plurality of monitoring cameras (10) based on information regarding current and future relative relationship between each of the plurality of monitoring cameras (10) and the vehicle (20); and
displaying the selected video image on the display device (53).
